# EUROPEAN PATENT APPLICATION

(11) **EP 4 782 881 A1**
(43) Date of publication of application: **29.07.2026**
(21) Application number: 23952969.6
(22) Date of filing: 19.09.2023
(51) Int. Cl.: G01S 13/86, G01S 13/931, G01S 17/86, G01S 17/931

(54) **DETERMINATION METHOD AND DETERMINATION DEVICE**

(71) Applicant: Nissan Motor Co., Ltd., Yokohama-shi, Kanagawa 221-0023 (JP)
(72) Inventor: KITAGO, Junichi, Atsugi-shi, Kanagawa 243-0123 (JP); GOKAN, Toshimichi, Atsugi-shi, Kanagawa 243-0123 (JP); INOUE, Takuya, Atsugi-shi, Kanagawa 243-0123 (JP); KOBAYASHI, Masahiro, Atsugi-shi, Kanagawa 243-0123 (JP)
(74) Representative: Grünecker Patent- und Rechtsanwälte PartG mbB
(86) International application number: PCT/JP2023/033855
(87) International publication number: WO 2025/062476

(57) **Abstract**

The present invention addresses the problem of providing a determination method and determination device which make it possible to appropriately determine the detection state of a detection means for an object. Provided are a determination method and a determination device (10) wherein: calculated is a value which indicates a detection state of a ranging device (11), which decreases if the ranging device (11) detects an object, and which increases if, when an imaging device (12) images an object existing in a portion (A3) of an imaging range (A2) that overlaps with the detection range (A1) of the ranging device (11), the ranging device (11) does not detect an object existing in said portion (A3); when the calculated value is less than a first value, it is determined that the ranging device (11) is in a first state in which the object can be detected; and when the calculated value is not less than second value which is greater than the first value, it is determined that the ranging device (11) is in a second state in which the object cannot be detected.

## Description

### Technical Field

The present invention relates to a determination method and a determination device.

### Background Art

A physical object detection device is known, comprising a first detection means for detecting physical objects in a first area and a second detection means for detecting physical objects in a second area that includes at least a part of the first area, wherein upon a determination that physical objects in a third area included in the first and second area are detected by the second detection means, when at least one physical object detected by the second detection means is not detected by the first detection means, the physical object detection device determines that the detection performance of the first detection means deteriorates (Patent Document 1).

### Prior Art Documents

### Patent Documents

Patent Document 1: JP2009-243963A

### Summary of Invention

### Problems to be solved by Invention

The above prior art involves a problem in that a detection means whose object detection performance is determined to have deteriorated is still determined to have the deteriorated detection performance even if its detection performance recovers.

A problem to be solved by the present invention is to provide a determination method and a determination device that are able to appropriately determine the detection state of an object detection means.

### Means for solving Problems

The present invention solves the above problem through: calculating a value indicating a detection state of a ranging device, the value decreasing when the ranging device detects an object while increasing, upon an imaging device imaging the object present in a portion of the imaging range that overlaps a detection range of the ranging device, when the ranging device does not detect the object present in the portion; when the calculated value is less than a first value, determine that the ranging device is in a first state in which the object can be detected; and when the calculated value is not less than a second value greater than the first value, determine that the ranging device is in a second state in which the object cannot be detected.

### Effect of Invention

According to the present invention, the detection state of the object detection means can be appropriately determined.

### Brief Description of Drawings

[FIG. 1] FIG. 1 is a block diagram illustrating an example of an embodiment of the determination device according to the present invention.
[FIG. 2] FIG. 2 is a plan view illustrating an example of the imaging range of the imaging device and the detection range of the ranging device of FIG. 1.
[FIG. 3] FIG. 3 is a time chart illustrating an example of values indicating the detection state of the ranging device of FIG. 1.
[FIG. 4] FIG. 4 is a flowchart illustrating an example of the processing procedure in the determination device of FIG. 1.
[FIG. 5A] FIG. 5A is a flowchart (part 1) illustrating another example of the processing procedure in the determination device of FIG. 1.
[FIG. 5B] FIG. 5B is a flowchart (part 2) illustrating another example of the processing procedure in the determination device of FIG. 1.

### Mode(s) for carrying out Invention

Hereinafter, one or more embodiments of the present invention will be described with reference to the drawings.

### <Configuration of Determination Device>

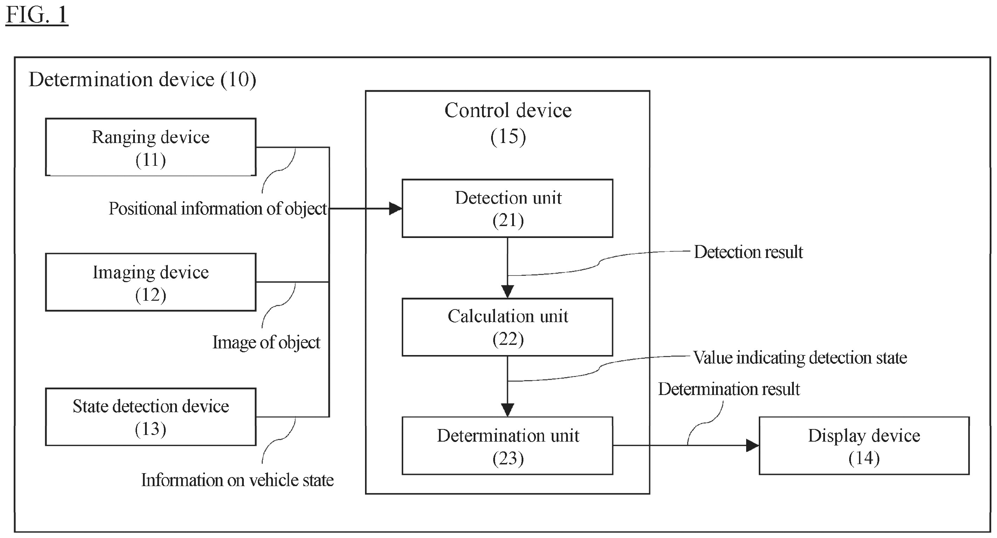

FIG. 1 is a block diagram illustrating a determination device 10 according to the present invention. The determination device 10 is a group of devices for determining the detection state of an on-board detection device when the vehicle is controlled to travel using autonomous travel control. All of the devices constituting the determination device 10 may be on-board devices, or some of them may be provided outside the vehicle.

The autonomous travel control refers to autonomously controlling the traveling operations of the vehicle using a control device of the vehicle. The traveling operations include all traveling operations such as acceleration, deceleration, starting, stopping, and turning. Autonomously controlling the traveling operations means that the control device controls the traveling operations using devices of the vehicle. The control device controls these traveling operations to a certain extent that is preliminarily determined. Traveling operations that are not controlled by the control device are manually operated by the driver. When the vehicle travels by the driver's manual operation without using the autonomous travel control, the control device does not perform the autonomous control of the traveling operations, and the traveling operations are controlled by the driver's operation.

As illustrated in FIG. 1, the determination device 10 includes a ranging device 11, an imaging device 12, a state detection device 13, a display device 14, and a control device 15. The devices constituting the determination device 10 are connected via a controller area network (CAN) or other onboard LAN and can exchange information with each other. Information is exchanged with devices provided outside the vehicle via networks such as the Internet or a local area network (LAN).

The ranging device 11 is a device that acquires the relative distance and relative speed between the ranging device 11 and an object, and examples thereof include laser radar, millimeter-wave radar, and light detection and ranging (LiDAR) units. The ranging device 11 acquires positional information of ranging points for objects present around the vehicle. The ranging point for an object is a point on the object at which the distance to the ranging device 11 is measured. The positional information of the ranging point includes information on the distance from the ranging device 11 to the ranging point, as well as information on the coordinates of the ranging point. The detection range within which the ranging device 11 detects an object can be set appropriately depending on the detection performance of the ranging device 11. To reduce blind spots when recognizing objects, a plurality of ranging devices 11 are arranged at the front, right side, left side, and rear of the vehicle.

The imaging device 12 is a device that images objects around the vehicle, and examples thereof include cameras equipped with imaging elements such as CCDs, ultrasonic cameras, and infrared cameras. The imaging range in which the imaging device 12 images objects can be set appropriately depending on the angle of view of the imaging device 12, etc., and at least a portion of the imaging range overlaps with the detection range of the ranging device 11 when viewed from the top or side. To reduce blind spots when recognizing objects, a plurality of imaging devices 12 are installed on the vehicle's front grille, below the left and right door mirrors, near the rear bumper, etc.

Objects are physical objects present on and around the road, including lane lines, center lines, road markings, medians, guardrails, curbs, road signs, traffic lights, and crosswalks. Objects also include obstacles that may affect the travel of the vehicle, such as automobiles other than the subject vehicle, motorcycles (motorbikes), bicycles, and pedestrians. The detection results of the ranging device 11 and imaging device 12 may be integrated or synthesized (sensor fusion) by the control device 15. This can supplement missing information on the object.

The state detection device 13 is a sensor that detects the vehicle's travelling state, and includes a vehicle speed sensor, an acceleration sensor, a yaw rate sensor, a steering angle sensor, and other similar sensors. The control device 15 acquires the detection results from the ranging device 11, imaging device 12, and state detection device 13 at predetermined time intervals (e.g., every 0.1 to 1 millisecond).

The display device 14 is a device for providing necessary information to the occupants of the vehicle and is a projector such as an LCD display provided on the instrument panel or a head-up display (HUD). The display device 14 may also include an input device (e.g., a touch panel) through which an occupant inputs instructions to the control device 15. The display device 14 may also include a speaker as an output device.

The control device 15 is a device for executing the driving assistance by autonomous travel control and for controlling and coordinating the devices that constitute the determination device 10, thereby executing determination of the detection state of the on-board detection device. The control device 15 is, for example, a computer, and includes a central processing unit (CPU) as a processor, a read only memory (ROM) that stores programs, and a random access memory (RAM) that serves as an accessible storage device. The CPU is an operating circuit that executes the programs stored in the ROM and achieves the functions of the control device 15.

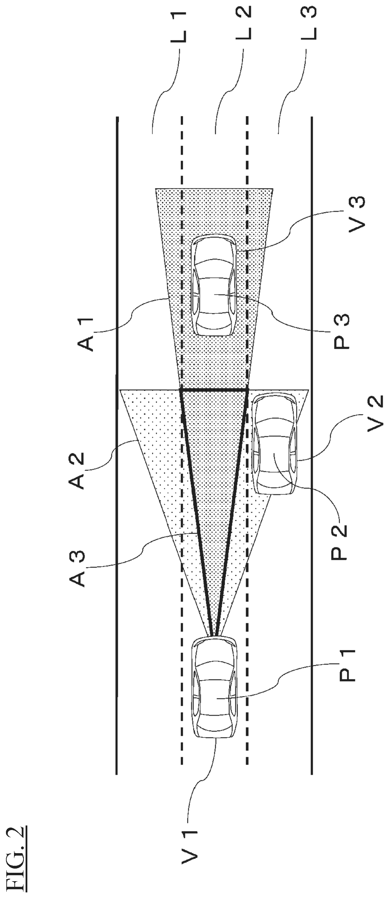

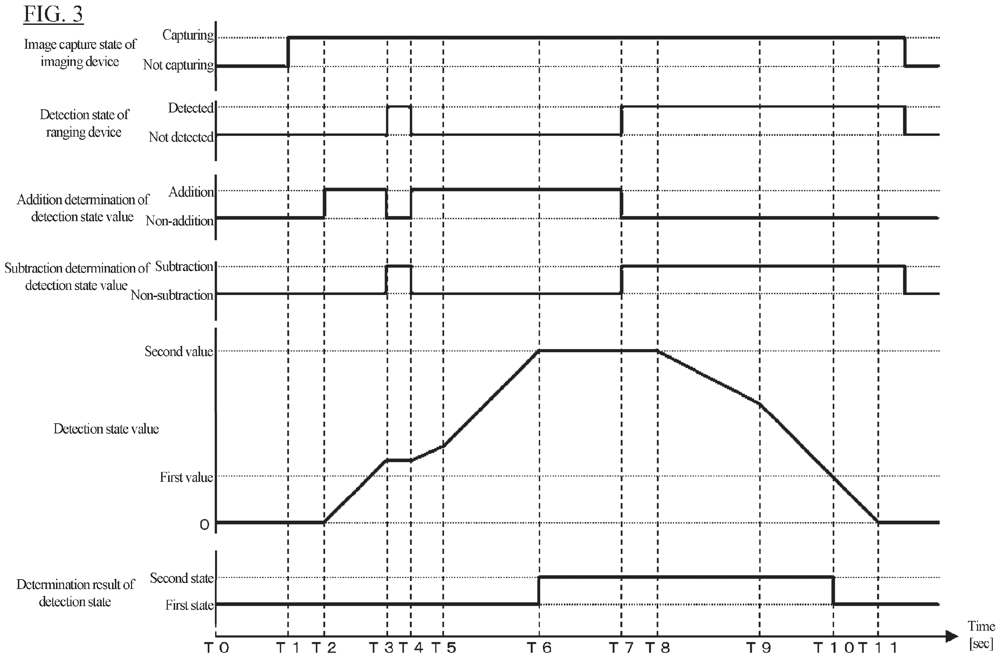

The control device 15 has a determination function used to execute the determination of the detection state of the on-board detection device. The ROM stores programs for achieving the determination function, and the CPU executes the programs stored in the ROM thereby to achieve the determination function. FIG. 1 appropriately extracts and illustrates a detection unit 21, a calculation unit 22, and a determination unit 23 as functional blocks that achieve the determination function. The functions of these functional blocks will be described below with reference to FIGS. 2 and 3.

### <Functions of Functional Blocks>

FIG. 2 is a plan view illustrating an example of a travel scene in which the control device 15 uses its determination function to execute determination of the detection state. It is assumed that the road extending in the left-right direction in FIG. 2 has three lanes, L1, L2, and L3, and the traveling direction of the vehicle is the direction from left to right on the drawing. It is also assumed that, in the travel scene illustrated in FIG. 2, the vehicle V1 equipped with the devices illustrated in FIG. 1 is traveling at position P1 on lane L, the detection range of the ranging device 11 is range A1, and the imaging range of the imaging device 12 is range A2.

When determining the detection state of the ranging device 11, the image captured by the imaging device 12 can be used. As an example, when the ranging device 11 does not detect an object captured by the imaging device 12, a determination is made that the ranging device 11 is in a state in which it cannot detect an object. Furthermore, when the ranging device 11 determined to be in a state in which it cannot detect an object detects an object again, a determination is made that the ranging device 11 is recovered to a state in which it can detect an object.

Unfortunately, however, in the above-described determination, the determination result of the detection state of the ranging device 11 changes depending on the object's position relative to the vehicle V1. For example, as illustrated in FIG. 2, when another vehicle V2 traveling in lane L3 is traveling at position P2 within imaging range A2 that is not included in detection range A1, the ranging device 11 is determined to be in a state in which it cannot detect an object, even when it is in a state in which it can detect an object. Furthermore, upon the other vehicle V2 changing lanes from lane L3 to lane L2, when the ranging device 11 detects the other vehicle V2, a determination is made that the ranging device 11 has recovered to a state in which it can detect an object.

Thus, if the determination result of the detection state of the ranging device 11 changes frequently depending on the positional relationship between the vehicle V1 and surrounding objects, the autonomous travel control of the vehicle V1 will be repeatedly stopped and restarted, giving an uncomfortable feeling to the occupants of vehicle V1. In addition to this case, if a portion of the ranging device 11 that emits electromagnetic waves is covered with snow, mud, or debris, the object within the detection range may or may not be detected, so the determination result of the detection state of the ranging device 11 changes frequently, resulting in intermittent autonomous travel control of the vehicle V1. As such, the control device 15 according to an embodiment of the present invention calculates a value indicating the detection state of the ranging device 11 and determines the detection state of the ranging device 11 based on that value.

The detection unit 21 acquires the detection results from the ranging device 11, imaging device 12, and state detection device 13 at predetermined time intervals (e.g., every 0.1 to 1 millisecond) and outputs the information to the calculation unit 22 and determination unit 23 as necessary. The detection unit 21 also detects objects from the acquired detection results. For example, as illustrated in FIG. 2, when a preceding vehicle V3 is traveling at position P3 in lane L2, position P3 of the preceding vehicle V3 falls within detection range A1, and therefore the detection unit 21 detects the preceding vehicle V3 from the detection results of the ranging device 11. The object detection processing in the detection unit 21 may be executed by the ranging device 11 and imaging device 12. In this case, the ranging device 11 and imaging device 12 output the object detection results to calculation unit 22.

The calculation unit 22 calculates a value indicating the detection state of the ranging device 11 (also referred to as the detection state value, hereinafter). The detection state value is a value used to determine the detection state of the ranging device 11, and is calculated to be low when the ranging device 11 is in a state in which it can detect an object (also referred to as the first state, hereinafter). Specifically, the first state is a state in which the ranging device 11 can properly detect an object within detection range A1. In contrast, the detection state value is calculated to be high when the ranging device 11 is in a state in which it cannot detect an object (also referred to as the second state, hereinafter). The second state is not particularly limited, and examples thereof include a state in which the ranging device 11 cannot properly emit electromagnetic waves (e.g., a state in which a portion of the ranging device 11 that emits electromagnetic waves is covered in snow), a state in which the ranging device 11 cannot properly process reflected waves from an object, and similar states. The initial value of the detection state value is set, for example, to 0.

The calculation unit 22 determines, based on the information output from the detection unit 21, whether or not the traveling state of the vehicle V1 is in a state in which the detection state value increases (or whether or not the detection state value decreases), and calculates the detection state value based on this determination result. The calculation unit 22 calculates the detection state value at predetermined time intervals (e.g., every 0.1 to 1 millisecond). In other words, the detection state value is a value that changes over time (with time) and is calculated depending on the time during which the conditions for increasing the value are satisfied and the time during which the conditions for decreasing the value are satisfied. Calculation of the detection state value commences after the ignition or accessory power of vehicle V1 is turned on and the control device 15 is activated.

Specifically, when the ranging device 11 (or detection unit 21) detects an object, the calculation unit 22 decreases the detection state value. For example, in the travel scene illustrated in FIG. 2, when the ranging device 11 detects a preceding vehicle V3 traveling at position P3, the calculation unit 22 decreases the detection state value while the ranging device 11 detects the preceding vehicle V3. Provided that the position of an object detected by the ranging device 11 is within the detection range A1, the position may be within the overlapping portion of the detection range A1 and the imaging range A2 (also referred to as the target range, hereinafter) or within a portion of the detection range A1 that is not included in the imaging range A2 (e.g., position P3 illustrated in FIG. 2).

On the other hand, upon the imaging device 12 capturing the image of an object present in the target range A3, indicated by the thick solid line in FIG. 2, when the ranging device 11 does not detect an object present in the target range A3, the calculation unit 22 increases the detection state value. For example, in the travel scene illustrated in FIG. 2, upon the preceding vehicle V3 traveling within the target range A3, when the imaging device 12 captures an image of the preceding vehicle V3 and the ranging device 11 does not detect the preceding vehicle V3 within a predetermined time after the imaging device 12 captures the image of the preceding vehicle V3, the calculation unit 22 increases the detection state value while the ranging device 11 does not detect the preceding vehicle V3. This predetermined time can be set to an appropriate value within a range that allows the detection state of the ranging device 11 to be appropriately determined, for example, 2 to 15 seconds.

The determination unit 23 determines whether the detection state of the ranging device **11** is the first state or the second state. Specifically, when the detection state value is less than a first value, the determination unit 23 determines that the ranging device 11 is in the first state, while when the detection state value is equal to or greater than a second value that is greater than the first value, the determination unit 23 determines that the ranging device 11 is in the second state. The first and second values can be set to appropriate values within a range in which the detection state of the ranging device 11 can be appropriately determined. When the detection state value is equal to or greater than the first value and less than the second value, the determination unit 23 maintains the determination result of the detection state of the ranging device 11. That is, when the detection state value changes from a state less than the first value to a state greater than or equal to the first value and less than the second value, the determination unit 23 determines that the ranging device 11 is in the first state. On the other hand, when the detection state value changes from a state greater than or equal to the second value to a state greater than or equal to the first value and less than the second value, the determination unit 23 determines that the ranging device 11 is in the second state. The determination unit 23 may notify the occupants of the vehicle V1 of the determination result via the display device 14.

Thus, by determining the detection state of the ranging device 11 using the detection state value, it is possible to prevent the ranging device 11 from being determined that it cannot detect an object when it temporarily does not detect an object, such as when there is another vehicle V2 traveling at position P2 within the imaging range A2 that is not within the target range A3, when the preceding vehicle V3 travels around a curve and is no longer included in the detection range A1, or when the vehicle V1 changes lanes. In addition, when snow or other dirt adheres to a portion of the ranging device 11 that emits electromagnetic waves, it may or may not be able to detect an object within the detection range A1, making it difficult to determine whether or not a preceding vehicle V3 is present, so a relatively long determination process is required to determine the detection state of the ranging device 11 based solely on the detection results of the ranging device 11. By determining the detection state of the ranging device 11 using the detection state value, the increase in the time required for this determination process can be suppressed.

When the detection state value becomes equal to or greater than the second value, the calculation unit 22 may not further increase the detection state value and may maintain the detection state value at the second value. In this case, when the conditions for decreasing the detection state value are satisfied, the calculation unit 22 decreases the detection state value. When the detection state value becomes 0, the calculation unit 22 may not further decrease the detection state value and may maintain the detection state value at 0. In this case, when the conditions for increasing the detection state value are satisfied, the calculation unit 22 increases the detection state value.

When the detection state value becomes equal to or greater than the second value, the control device 15 may suppress the operation of control using the ranging device 11 (e.g., autonomous travel control such as adaptive cruise control or collision damage mitigation braking). In this case, the determination unit 23 may use the display device 14 to notify the occupants of the vehicle V1 that the detection state of the ranging device 11 is in the second state and that the operation of some autonomous travel control is suppressed. Furthermore, upon the determination that the detection state of the ranging device 11 is in the second state, when the detection state value becomes less than the first value, the control device 15 may release the suppression of the operation of control using the ranging device 11. In this case, the determination unit 23 may use the display device 14 to notify the occupants of the vehicle V1 that the detection state of the ranging device 11 is in the first state and that the suppression of autonomous travel control operation is released (or that the autonomous travel control using the ranging device 11 is now operable).

When the detection unit 21 acquires an image captured by the imaging device 12 and detects an object from the acquired image, it may determine whether or not the object captured by the imaging device 12 is present in the target range A3. When the detection unit 21 determines that the object captured by the imaging device 12 is present in the target range A3, the calculation unit 22 calculates a detection state value. Alternatively, when the detection unit 21 determines that the object captured by the imaging device 12 is present in the target range A3, the calculation unit 22 may determine whether or not the ranging device 11 detects an object present in the target range A3. Furthermore, when the detection unit 21 determines that the object captured by the imaging device 12 is not present in the target range A3, the calculation unit 22 determines whether or not the ranging device 11 detects an object present in the detection range A1.

When the period of time during which the ranging device 11 does not detect an object is short, the calculation unit 22 may decrease an amount of increase in the detection state value than when the period of time is long. This can prevent the detection state value from increasing when the ranging device **11** temporarily stops detecting an object. Furthermore, when the period of time during which the ranging device 11 detects an object is long, the calculation unit 22 may increase an amount of decrease in the detection state value than when the period of time is short. By promoting changes (increases or decreases) in the detection state value while the same travel scene continues, the increase in the time required to determine the detection state of the ranging device 11 can be suppressed.

When the ranging device 11 detects an object, the detection unit 21 may determine whether or not a subtraction start time has elapsed since the ranging device 11 detected the object. When the detection unit 21 acquires, from the time data in the control device 15, the time when the ranging device 11 detects an object, and determines that the subtraction start time has not elapsed since the acquired time, the calculation unit 22 does not decrease the detection state value. In contrast, when the detection unit 21 determines that the subtraction start time has elapsed since the acquired time, the calculation unit 22 decreases the detection state value. This can suppress the decrease in the detection state value when snow or other dirt adheres to a portion of the ranging device 11 that emits electromagnetic waves and it may or may not be able to detect an object within the detection range A1. The subtraction start time can be set appropriately within a range that allows the detection state of the ranging device 11 to be appropriately determined, for example, 1 to 5 seconds.

When the ranging device 11 detects an object, the detection unit 21 may determine whether or not the traveling speed of the vehicle V1 is equal to or greater than a subtraction start speed. When the detection unit 21 acquires the traveling speed of vehicle V1 from the vehicle speed sensor (state detection device 13) and the acquired traveling speed is determined to be equal to or greater than the subtraction start speed, the calculation unit 22 decreases the detection state value. In contrast, when the detection unit 21 determines that the acquired traveling speed is less than the subtraction start speed, the calculation unit 22 does not decrease the detection state value. This can prevent the detection state value from decreasing due to an object in the detection range A1, such as when the vehicle V1 is traveling at a relatively slow speed in a congested traffic queue, or when the vehicle V1 is stopped before an intersection. The subtraction start speed can be set appropriately within a range in which the detection state of the ranging device 11 can be appropriately determined, for example, greater than 0 km/h and less than 20 km/h.

When the imaging device 12 captures an image of an object within the target range A3 and the ranging device 11 does not detect an object within the target range A3, the detection unit 21 may determine whether or not the traveling speed of the vehicle V1 is equal to or greater than a predetermined speed. When the detection unit 21 acquires the traveling speed of the vehicle V1 from the vehicle speed sensor (state detection device 13) and the acquired traveling speed is determined to be equal to or greater than the predetermined speed, the calculation unit 22 increases the detection state value. In contrast, when the detection unit 21 determines that the acquired traveling speed of the vehicle V1 is less than the predetermined speed, the calculation unit 22 does not increase the detection state value. This can prevent the detection state value from increasing when there are two or more objects around the stopped vehicle V1 and the ranging device 11 cannot accurately detect the two or more objects. The predetermined speed can be set appropriately within a range in which the detection state of the ranging device 11 can be appropriately determined, for example, between 10 and 30 km/h.

The detection unit 21 may determine whether or not the object detected by the ranging device 11 and/or imaging device 12 is a preceding vehicle V3 traveling ahead of vehicle V1. When the detection unit 21 determines that the object is a preceding vehicle V3, the calculation unit 22 calculates an inter-vehicle time with the preceding vehicle V3. When the inter-vehicle time with the preceding vehicle V3 is short, the amount of decrease in the detection state value is reduced more than when the inter-vehicle time is long. This can prevent adaptive cruise control from being erroneously resumed in a state of approaching the preceding vehicle V3, preventing the vehicle V1 from approaching the preceding vehicle V3. The inter-vehicle time is the time it takes for the vehicle V1 to reach the position of the preceding vehicle V3, and is obtained by dividing the inter-vehicle distance between the vehicle V1 and the preceding vehicle V3 by the traveling speed of vehicle V1.

FIG. 3 is a time chart illustrating an example of detection state values calculated by the calculation unit 22. The time charts illustrated in FIG. 3 are, from top to bottom, a chart illustrating the image capture state of the imaging device 12, a chart illustrating the detection state of the ranging device 11, a chart illustrating an addition determination of the detection state value, a chart illustrating a subtraction determination of the detection state value, a chart illustrating the detection state value, and a chart illustrating the determination result of the detection state, with the horizontal axis representing time. An example of how the detection state value changes over time will be described below using the time chart illustrated in FIG. 3.

First, at time T0, the control device 15 is activated, and the calculation process of the calculation unit 22 begins. In the example illustrated in FIG. 3, the initial value of the detection state value is set to 0. At time T1, the imaging device 12 captures an image of an object in the target range A3, causing the image capture state of the imaging device 12 to change from "not capturing" to "capturing." Between time T1 and time T2, the image capture state of the imaging device 12 is "capturing," while the detection state of the ranging device 11 remains "not detected." Because the time from time T1 to time T2 corresponds to a predetermined time, at time T2 the addition determination of the detection state value changes from "non-addition" to "addition," and the detection state value begins to increase.

Between time T2 and time T3, the image capture state of the imaging device 12 is "capturing" and the detection state of the ranging device 11 is "not detected," so the state detection value increases in proportion to time. At time T3, when the ranging device 11 detects an object in the target range A3, the detection state of the ranging device 11 changes to "detected," and the increase in the detection state value stops. Between time T3 and time T4, the image capture state of the imaging device 12 is "capturing" and the detection state of the ranging device 11 is "detected," so the state detection value is maintained. However, because the time from time T3 to time T4 is shorter than the subtraction start time, the detection state value does not decrease.

At time T4, the image capture state of the imaging device 12 changes again to "capturing" and the detection state of the ranging device 11 changes to "not detected," so the detection state value begins to increase. From time T4 to time T6, the detection state value continues to increase, but because the states of the ranging device 11 and imaging device 12 remain the same for a relatively long time, the amount of increase in the detection state value increases from time T5. Specifically, the amount of increase in the detection state value between time T5 and time T6 is twice the amount of increase between time T4 and time T5.

At time T6, the detection state value reaches the second value, so the determination result of the detection state of the ranging device 11 changes from the "first state" to the "second state." The detection state value does not increase any further and remains at the second value. At time T7, the ranging device 11 detects an object in the target range A3, so the detection state of the ranging device 11 becomes "detected," the addition determination for the detection state value becomes "non-addition," and the subtraction determination for the detection state value becomes "subtraction." Then, at time T8, which is the subtraction start time after time T7, the detection state value begins to decrease.

Between time T8 and time T10, the image capture state of the imaging device 12 is "capturing" and the detection state of the ranging device 11 is "detected," so the state detection value decreases in proportion to time. Between time T8 and time T10, the detection state value continues to decrease, but because the states of the ranging device 11 and imaging device 12 remain the same for a relatively long time, the amount of decrease in the detection state value increases from time T9. Specifically, the amount of decrease in the detection state value between time T9 and time T10 is twice the amount of decrease between time T8 and time T9.

At time T10, the detection state value becomes less than the first value, and the determination result of the detection state of the ranging device 11 changes from the "second state" to the "first state." Then, at time T11, the detection state value becomes 0. The detection state value does not decrease any further and remains at 0.

### <Processing in Determination Device>

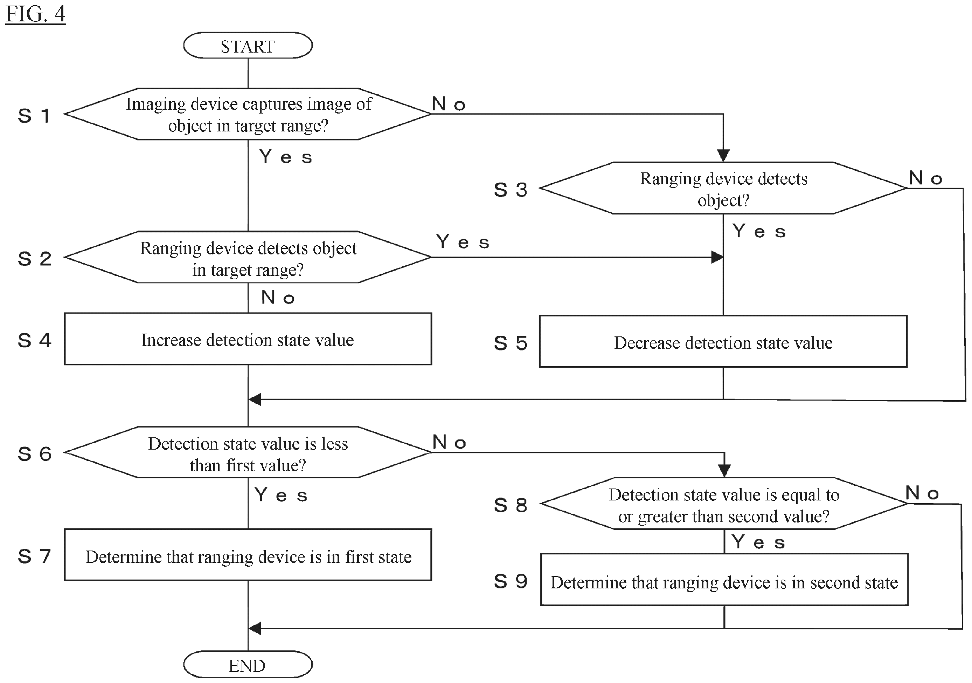

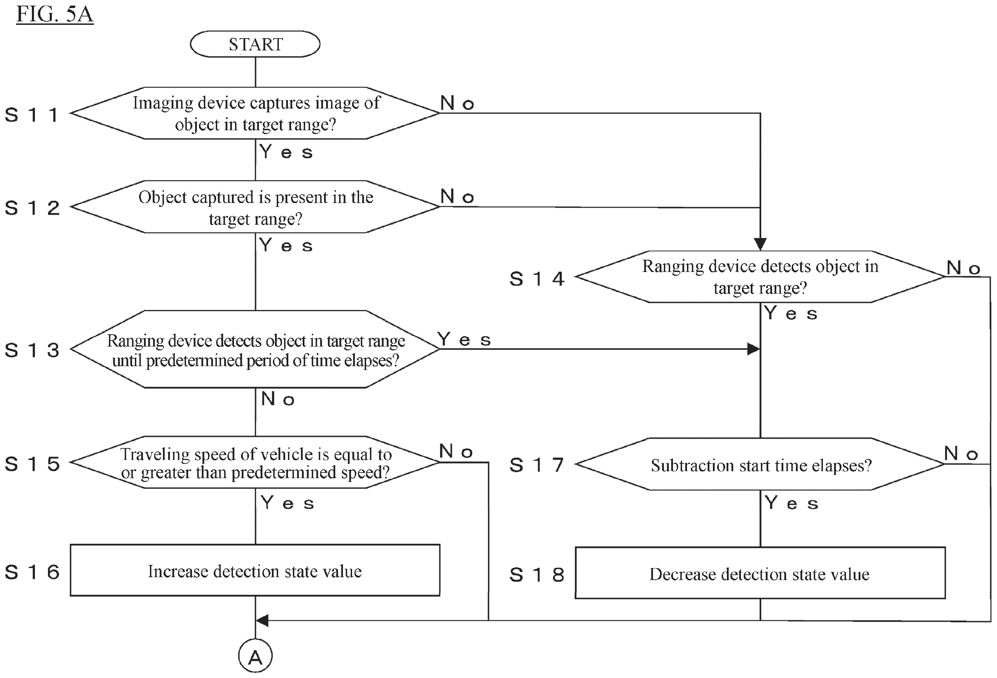

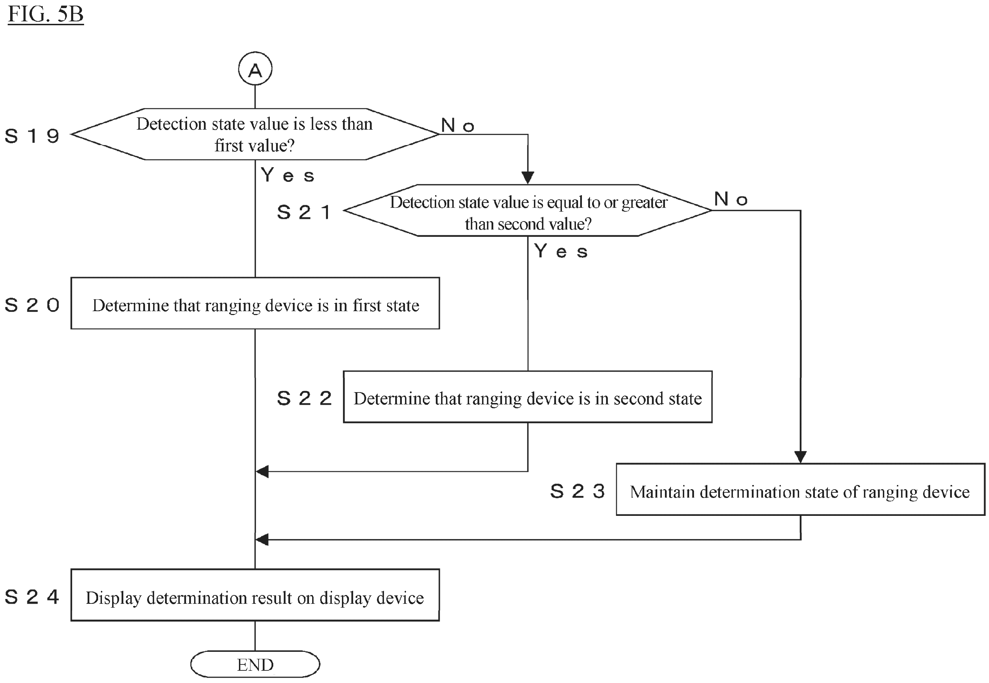

The information processing procedure in the determination device 10 will be described with reference to FIGS. 4, 5A, and 5B. The process described below is repeatedly executed at predetermined time intervals (e.g., every 0.1 to 1 millisecond) by the processor (CPU) included in the control device 15.

FIG. 4 is a flowchart illustrating an example of the processing procedure in the determination device 10. First, in step S1, the detection unit 21 determines whether or not the imaging device 12 captures an image of an object in the target range A3. When a determination is made that the imaging device 12 captures an image of an object in the target range A3, the process proceeds to step S2, in which a determination is made as to whether or not the ranging device 11 detects an object in the target range A3. On the other hand, when a determination is made that the imaging device 12 does not captures an image of an object in the target range A3, the process proceeds to step S3, in which a determination is made as to whether or not the ranging device 11 detects an object.

When a determination is made in step S2 that the ranging device 11 does not detect an object in the target range A3, the process proceeds to step S4, in which the calculation unit 22 increases the detection state value. When a determination is made in step S2 that the ranging device 11 detects an object in the target range A3, or when a determination is made in step S3 that the ranging device 11 detects an object, the process proceeds to step S5, in which the calculation unit 22 decreases the detection state value. When a determination is made in step S3 that the ranging device 11 does not detect an object, the process proceeds to step S6.

In step S6, the determination unit 23 determines whether or not the detection state value is less than the first value. When a determination is made that the detection state value is less than the first value, the process proceeds to step S7, in which a determination is made that the ranging device **11** is in the first state, and the process ends. On the other hand, when a determination is made that the detection state value is equal to or greater than the first value, the process proceeds to step S8, in which a determination is made as to whether or not the detection state value is equal to or greater than the second value. When a determination is made that the detection state value is equal to or greater than the second value, the process proceeds to step S9, in which a determination is made that the ranging device 11 is in the second state, and the process ends. On the other hand, when a determination is made that the detection state value is less than the second value, the process ends directly.

FIGS. 5A and 5B are flowcharts illustrating another example of the processing procedure in the determination device 10. First, in step S11, the detection unit 21 determines whether or not the imaging device 12 captures an image of an object in the imaging range A2. When a determination is made that the imaging device 12 does not capture an image of an object in the imaging range A2, the process proceeds to step S14. On the other hand, when a determination is made that the imaging device 12 captures an image of an object in the imaging range A2, the process proceeds to step S12.

In step S12, a determination is made as to whether or not the object captured by the imaging device 12 is present in the target range A3. When a determination is made that the object captured by the imaging device 12 is present in the target range A3, the process proceeds to step S13. On the other hand, when a determination is made that the object captured by the imaging device 12 is not present in the target range A3, the process proceeds to step S14.

In step S14, a determination is made as to whether or not the ranging device 11 detects an object within detection range A1. When a determination is made that the ranging device 11 detects an object in the detection range A1, the process proceeds to step S17. On the other hand, when a determination is made that the ranging device 11 does not detect an object in the detection range A1, the process proceeds to step S19 of FIG. 5B.

In step S13, a determination is made as to whether or not the ranging device 11 detects an object in the target range A3 until a predetermined period of time elapses. When a determination is made that the ranging device 11 detects an object in the target range A3 until the predetermined period of time elapses, the process proceeds to step S17. On the other hand, when a determination is made that the ranging device 11 does not detect an object in the target range A3 until the predetermined period of time elapses, the process proceeds to step S15.

In step S15, a determination is made as to whether or not the traveling speed of the vehicle V1 is equal to or greater than a predetermined speed. When a determination is made that the traveling speed of the vehicle V1 is equal to or greater than the predetermined speed, the process proceeds to step S16, in which the calculation unit 22 increases the detection state value. On the other hand, when a determination is made that the traveling speed of vehicle V1 is less than the predetermined speed, the process proceeds to step S19 of FIG. 5B.

In step S17, the detection unit 21 determines whether or not the subtraction start time elapses. When a determination is made that the subtraction start time elapses, the process proceeds to step S18, in which the calculation unit 22 decreases the detection state value. On the other hand, when a determination is made that the subtraction start time does not elapse, the process proceeds to step S19 of FIG. 5B.

In step S19 of FIG. 5B, the determination unit 23 determines whether or not the detection state value is less than the first value. When the determination unit 23 determines that the detection state value is less than the first value, the process proceeds to step S20, in which it determines that the ranging device **11** is in the first state, and the process proceeds to step S24. On the other hand, when the determination unit 23 determines that the detection state value is equal to or greater than the first value, the process proceeds to step S21, in which the determination unit 23 determines whether or not the detection state value is equal to or greater than the second value. When the determination unit 23 determines that the detection state value is equal to or greater than the second value, the process proceeds to step S22, in which the determination unit 23 determines that the ranging device **11** is in the second state, and the process proceeds to step S24. On the other hand, when the determination unit 23 determines that the detection state value is less than the second value, the process proceeds to step S23. In step S23, the determination unit 23 maintains the determination state of the ranging device 11. Then, in step S24, the determination result is displayed on the display device 14, and the process ends.

<Embodiments of Present Invention>

According to the present embodiment, a determination method executed by a control device 15 of a vehicle V1 is provided, the control device 15 comprising: a ranging device 11 configured to detect an object within a detection range A1; and an imaging device 12 configured to image an imaging range A2 that overlaps at least a part of the detection range A1, the control device 15 operating to: calculate a value indicating a detection state of the ranging device 11, the value decreasing when the ranging device 11 detects the object while increasing, upon the imaging device 12 imaging the object present in a portion of the imaging range A2 that overlaps the detection range A1, when the ranging device 11 does not detect the object present in the portion; when the value is less than a first value, determine that the ranging device 11 is in a first state in which the object can be detected; and when the value is not less than a second value greater than the first value, determine that the ranging device 11 is in a second state in which the object cannot be detected. This allows the detection state of the ranging device 11 to be appropriately determined.

In the determination method of the present embodiment, the control device 15 operates to, when a period of time during which the ranging device 11 does not detect the object is short, decrease an amount of increase in the value than when the period of time is long. This can prevent the detection state value from increasing when the ranging device 11 temporarily stops detecting an object.

In the determination method of the present embodiment, the control device 15 operates to, upon the ranging device 11 detecting the object, when a subtraction start time has not elapsed since the ranging device 11 detects the object, not decrease the value. This can suppress the decrease in the detection state value when snow or other dirt adheres to a portion of the ranging device 11 that emits electromagnetic waves and it may or may not be able to detect an object within the detection range A1.

In the determination method of the present embodiment, the control device 15 operates to, upon the imaging device 12 imaging the object present in the portion A3 and the ranging device 11 not detecting the object present in the portion A3, when a traveling speed of the vehicle V1 is equal to or greater than a predetermined speed, increase the value. This can prevent the detection state value from increasing when there are two or more objects around the stopped vehicle V1 and the ranging device 11 cannot accurately detect the two or more objects.

In the determination method of the present embodiment, the control device 15 operates to: when the object is a preceding vehicle V3 traveling ahead of the vehicle V1, calculate an inter-vehicle time with the preceding vehicle V3; and when the inter-vehicle time is short, decrease an amount of decrease in the value than when the inter-vehicle time is long. This can prevent adaptive cruise control from being erroneously resumed in a state of approaching the preceding vehicle V3, preventing the vehicle V1 from approaching the preceding vehicle V3.

In the determination method of the present embodiment, the control device 15 operates to, when a period of time during which the ranging device 11 detects the object is long, increase an amount of decrease in the value than when the period of time is short. Thus, by promoting changes in the detection state value when the same travel scene continues, the increase in the time required to determine the detection state of the ranging device 11 can be suppressed.

Furthermore, according to the present embodiment, a determination device 10 is provided, comprising: a ranging device 11 configured to detect an object within a detection range A1; an imaging device 12 configured to image an imaging range A2 that overlaps at least a part of the detection range A1; a calculation unit 22 configured to calculate a value indicating a detection state of the ranging device 11, the value decreasing when the ranging device 11 detects the object while increasing, upon the imaging device 12 imaging the object present in a portion A3 of the imaging range A2 that overlaps the detection range A1, when the ranging device 11 does not detect the object present in the portion A3; and a determination unit 23 configured to: when the value calculated by the calculation unit 22 is less than a first value, determine that the ranging device 11 is in a first state in which the object can be detected; and when the value calculated by the calculation unit 22 is not less than a second value greater than the first value, determine that the ranging device 11 is in a second state in which the object cannot be detected. This allows the detection state of the ranging device 11 to be appropriately determined.

### Description of Reference Numerals

10... Determination device, 11... Ranging device, 12... Imaging device, 13... State detection device, 14... Display device, 15... Control device, 21... Detection unit, 22... Calculation unit, 23...Determination unit A1... Detection range, A2... Imaging range, A3... Target range, L1, L2, L3... Lane, P1, P2, P3... Position, V1... Vehicle, V2... Another vehicle, V3... Preceding vehicle

## Claims

1. A determination method executed by a control device of a vehicle, the control device comprising: a ranging device configured to detect an object within a detection range; and an imaging device configured to image an imaging range that overlaps at least a part of the detection range, the control device operating to:
calculate a value indicating a detection state of the ranging device, the value decreasing when the ranging device detects the object while increasing, upon the imaging device imaging the object present in a portion of the imaging range that overlaps the detection range, when the ranging device does not detect the object present in the portion;
when the value is less than a first value, determine that the ranging device is in a first state in which the object can be detected; and
when the value is not less than a second value greater than the first value, determine that the ranging device is in a second state in which the object cannot be detected.

2. The determination method according to claim 1, wherein the control device operates to, when a period of time during which the ranging device does not detect the object is short, decrease an amount of increase in the value than when the period of time is long.

3. The determination method according to claim 1 or 2, wherein the control device operates to, upon the ranging device detecting the object, when a subtraction start time has not elapsed since the ranging device detects the object, not decrease the value.

4. The determination method according to any one of claims 1 to 3, wherein the control device operates to, upon the imaging device imaging the object present in the portion and the ranging device not detecting the object present in the portion, when a traveling speed of the vehicle is equal to or greater than a predetermined speed, increase the value.

5. The determination method according to any one of claims 1 to 4, wherein the control device operates to:
when the object is a preceding vehicle traveling ahead of the vehicle, calculate an inter-vehicle time with the preceding vehicle; and
when the inter-vehicle time is short, decrease an amount of decrease in the value than when the inter-vehicle time is long.

6. The determination method according to any one of claims 1 to 5, wherein the control device operates to, when a period of time during which the ranging device detects the object is long, increase an amount of decrease in the value than when the period of time is short.

7. A determination device comprising:
a ranging device configured to detect an object within a detection range;
an imaging device configured to image an imaging range that overlaps at least a part of the detection range;
a calculation unit configured to calculate a value indicating a detection state of the ranging device, the value decreasing when the ranging device detects the object while increasing, upon the imaging device imaging the object present in a portion of the imaging range that overlaps the detection range, when the ranging device does not detect the object present in the portion; and
a determination unit configured to:
when the value calculated by the calculation unit is less than a first value, determine that the ranging device is in a first state in which the object can be detected; and
when the value calculated by the calculation unit is not less than a second value greater than the first value, determine that the ranging device is in a second state in which the object cannot be detected.
